Europäisches Patentamt

**European Patent Office**

Office européen des brevets

(19)

(11) Veröffentlichungsnummer : **0 023 946**
**B1**

(12) **EUROPÄISCHE PATENTSCHRIFT**

(45) Veröffentlichungstag der Patentschrift :
09.06.82

(51) Int. Cl.³ : **B 60 J   3/02**

(21) Anmeldenummer : **80102530.5**

(22) Anmeldetag : **08.05.80**

(54) **Sonnenblende für Fahrzeuge mit einem durch eine elektrische Lichtquelle beleuchteten Spiegel.**

(30) Priorität : **09.08.79 DE 2932302**

(43) Veröffentlichungstag der Anmeldung :
**18.02.81 (Patentblatt 81/07)**

(45) Bekanntmachung des Hinweises auf die Patenterteilung : **09.06.82 Patentblatt 82/23**

(84) Benannte Vertragsstaaten :
**DE FR GB IT SE**

(56) Entgegenhaltungen :
**DE B 2 703 447**
**DE U 7 721 482**
**DE U 7 908 205**
**DE U 7 922 783**

(73) Patentinhaber : **Gebr. Happich GmbH**
**Postfach 10 02 49 Clausenbrücke 1**
**D-5600 Wuppertal 1 (DE)**

(72) Erfinder : **Kaiser, Klaus-Peter**
**Sellscheid 42**
**D-5632 Wermelskirchen (DE)**
Erfinder : **Viertel, Lothar**
**V. Gartenreihe 48**
**D-6630 Saarlouis (DE)**
Erfinder : **Nowak, Manfred**
**Hasselstrasse 159**
**D-5650 Solingen (DE)**

(74) Vertreter : **Rehders, Jochen**
**c/o Fa. Gebr. Happich GmbH Postfach 10 02 49**
**Clausenbrücke 1**
**D-5600 Wuppertal 1 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

EP 0 023 946 B1

Sonnenblende für Fahrzeuge mit einem durch eine elektrische Lichtquelle beleuchteten Spiegel

Die Erfindung bezieht sich auf eine Sonnenblende für Fahrzeuge der im Oberbegriff des Anspruchs 1 angegebenen Art. Eine derartige Sonnenblende ist aus der DE-U-7 908 205 bekannt.

Es ist bereits bekannt, zur Führung der elektrischen Leiter oder auch nur eines stromführenden Stranges für die Lichtquelle bei beleuchteten Sonnenblendenspiegeln die Achse des Schwenklagers auszunutzen. Bei der Doppelführung (+ und −) sind zwei Adern vorgesehen, die durch die hohl ausgebildete Schwenkachse durchgeführt sind.

Bei einer weiteren Ausführung ist die Lagerachse zwingend aus einem elektrisch leitenden Material und der Gegenpol als Ader mit einem durch einen Isoliermantel geschützten weiteren Leiter ausgebildet. Es ist ferner bekannt, nur einen einzigen Stromleiter durch die Lagerachse selbst (metallische Achse), zu leiten und die zweite Stromführung andersartig, beispielsweise durch das Gegenlager, vorzunehmen.

Diese Konstruktionsvarianten weisen jeweils besondere Nachteile auf ; teils sind sie herstellungstechnischer Art, teils beeinträchtigen sie die Dauerfunktion und die laufende Sicherheit beträchtlich. So ist es nachteilig, eine metallische Achse einzusetzen, insbesondere deshalb, weil die Schwenklagerachse immer aus zwei winklig zueinander stehenden Schenkeln besteht und dadurch eine mit einem scharfen Winkel geführte Aufnahme für den elektrischen Leiter besteht. Insbesondere dann, wenn die Fertigung der Lagerachse aus Rohrabschnitten vorgenommen wird, bestehen, wie noch angeführt wird, gravierende Nachteile.

Dem DE-U-78 08 205, B 60 J, 3/02 liegt generell eine Lagerachse aus Rohrabschnitten zugrunde und weist verschiedene Variationen der Ausbildung einer solchen Achse auf.

Als nachteilig wird bei einer metallischen Achse empfunden, daß von einem Rohling ausgegangen werden muß, der erst einmal selbst herzustellen ist, insgesamt mehrere Arbeitsschritte benötigt werden, um die Achse in die endgültige Form zu bringen. Zwingend notwendig ist nämlich das Entgraten der Schnittflächen, weil sonst die scharfen und zackigen Kanten beim Drehen und/oder Klappen des Sonnenblendenkörpers Beschädigungen an der Lagerausbildung herbeiführen und dann, wenn eine isolierte elektrische Leitung durch- oder eingeführt ist, diese Isolierung sehr schnell beschädigt wird. Ebenfalls wird ein hoher Zeitaufwand benötigt, wenn Leiter durch die Lagerachse montagemäßig eingeführt werden, insbesondere dann, wenn die Abwinklung der Achse nahe 90 Grad liegt, was bei den meisten Schwenklagern der Fall ist.

Die metallische Lagerachse nach dem Gbm bildet in jedem Ausführungsbeispiel, um Konstruktionsteile einzusparen, einen Teil des Schaltkontaktes ; hierzu muß sie weiter bearbeitet werden. Entweder muß sie mit einem gesonderten Kontaktelement versehen werden, also eine Zweibereichsausbildung aufweisen, nämlich einmal eine Kontakt- und zum andern eine Isolierstelle oder aber die Achse muß von ihrer kreisrunden Ausbildung durch Ausschnitte oder Abflachungen zu abhebenden Kontaktflächen umgeformt werden. Diese Ausführungen zeigen, daß allein eine metallische Lagerachse, insbesondere eine aus Rohrabschnitten hergestellte, herstellungstechnisch ungünstig oder auch betriebstechnisch störanfällig ist.

Die Nachteile, die sich folgetechnisch aus einer derartigen metallischen Lagerachse ergeben, betreffen aber auch den Gegenkontakt. Zwingend notwendig ist immer eine Kontaktfeder, nämlich für eine beaufschlagte Berührung und auch für die Selbstreinigung der Kontaktflächen. Diese notwendige Konstruktion der Kontaktfeder muß nun anderen Teilen, und zwar Teilen der Stabilisierungseinlage des Sonnenblendenkörpers zugeordnet werden, so daß die Sonnenblendeneinlage nicht nur wie bisher mit einem einfachen Lager zur Aufnahme der Lagerachse ausgerüstet werden muß, sie muß vielmehr eine Ausbildung zusätzlich aufweisen, die die Kontaktfeder sicher hält. Es ist ferner anzuführen, daß nach dem heutigen Stand der Technik die Stabilisierungseinlage im Sonnenblendenkörper aus Kunststoff besteht, so daß die Feder nach Ausbildung und Lagerung auch für die Verbindung mit einem elektrischen Leiter ausgerüstet sein muß.

Es ist Aufgabe der Erfindung, eine Sonnenblende für Fahrzeuge mit einem durch eine elektrische Lichtquelle beleuchteten Spiegel mit einer herstellungs- und montagetechnisch einfachen und eine hohe Gebrauchstüchtigkeit aufweisenden elektrischen Zuleitung für die Lichtquelle zu versehen.

Die Aufgabe wird erfindungsgemäß durch die im kennzeichnenden Teil des Anspruchs 1 angegebenen Gestaltungsmerkmale gelöst.

Obwohl die erfindungsgemäße Ausführung eine Lagerachse einschließt, die nicht unbedingt in einem einzigen Arbeitsgang endverformt anfällt, beispielsweise ein Spritzling ist, der nachgebogen oder auch nachträglich eine weitere Verformung, gegebenenfalls eine spanabhebende, erhält, wird bei der erfindungsgemäßen Ausführung jedoch von einem Spritzling ausgegangen, welcher ohne jede Nacharbeit seine endgültige einsatzfähige Form erhält. Dadurch wird ein billiger und stetig formgleicher, mit anderen Bauteilen ohne jede Schwierigkeit kombinierbarer Baukörper erstellt. Fernerhin kann wie bei der in der DE-U-7 721 482 beschriebenen Sonnenblende eine solche Lagerachse bereits als Isolierkörper eingesetzt werden, durch den ohne jeden Nachteil ein blanker Leiter geführt ist oder auch beschädigte isolierte Leiter keine Störung nach sich ziehen. Als besonderer Vorteil einer als Spritzling ausgebildeten Lagerachse ist die ohne jede Mehrarbeit erstellbare Halterung für den elektrischen Schaltkontakt anzuführen, wozu lediglich das im Sonnenblendenkörper aufgenommene Lagerachsenende entsprechend der Form des auszunehmenden Teiles des elektrischen Schaltkontaktes ausgebildet ist. Die Maßnahme, die Bohrung in jedem Schenkel der Lagerachse vollständig durchgehend und im Winkelbereich frei auslaufend auzubilden dient ausschließlich der problemlosen Einführung des elektrischen Leiters ; so ist es möglich, den elektrischen Leiter von einem Schenkelende bis in die Ausnehmung durchzuführen und das in der Ausnehmung angekommene Ende, von der Ausnehmung ausgehend, zum anderen abgewinkelten Ende der Lagerachse zu leiten. Es ist aber auch möglich, beide Enden von der Ausnehmung ausgehend, zu den Lagerachsenenden zu führen. Das Einführen des oder der elektrischen Leiter wird durch die Maßnahme nach Anspruch 3 weiterhin erleichtert.

Es ist zweckmäßig, wenn die Verdrehsicherung des von der Halterung der Lagerachse aufgenommenen Schaltkontaktteiles ein Kontaktnocken ist, der die Wandung der Halterung durchgreift.

Um einen möglichst großen Federweg zu bilden und der Ermüdung der Federeigenschaften entgegenzuwirken, wird der von der Halterung der Lagerachse aufgenommene elektrische Schaltkontaktteil durch eine U-förmige metallische Feder mit einem Kontaktnocken gestaltet, der im Bereich des freien Endes eines Schenkels der U-förmigen Feder angeordnet ist. Durch diese Ausbildung können alle notwendigen Erfordernisse eines Federkontaktes voll erfüllt werden.

Der Schaltkontakt kann eine unterschiedliche Ausführung aufweisen, so ein metallischer Stanzling sein, wobei der Schaltnocken aus einem Zweitmaterial gefertigt und mit einem Schenkel verbunden ist. Es ist ebenfalls möglich, insbesondere dann, wenn das Stanzteil aus einem Material besteht, welches für Schaltnocken geeignet ist, daß der Schaltnocken einstückig und materialeinheitlich mit dem Stanzteil ausgebildet ist.

Eine andere Ausführungsform des elektrischen Schaltkontaktteiles kann aus einem strangförmigen Material, wie Draht, bestehen, wobei die Klemmschenkel krampenartig zueinander stehen und ein Ende mit einer schließbaren Klemmung versehen ist, die den Kontaktteil des elektrischen Leiters aufnimmt. Schalterkontaktteile aus Draht sind besonders einfach und ohne Materialabfall herstellbar, insbesondere in verschiedene Richtungen nacheinander abbiegbar, ohne daß eine Materialschwächung eintritt. Auch ist die Wahl des Einsatz-Materials leichter durchführbar ; es braucht bei Draht weder auf eine gewisse Tiefziehqualität noch auf eine Einreißfestigkeit geachtet zu werden. Auch ist hervorzuheben, daß keine scharfen Stanzkanten vorhanden sind, durch die sonst Rücksicht auf angrenzende weichere, leicht zu beschädigende Materialien genommen werden muß. Auch bilden sich Vorteile bei der Verbindung des Schalterkontaktteiles aus Draht mit dem elektrischen Leiter heraus. Eine Klemmverbindung ist sicherer und kräftiger als bei einem Stanzteil auszuführen ; nicht zu verkennen ist der Vorteil bei einer Lötverbindung, weil es sich um zwei etwa gleich voluminöse Materialien handelt, die deshalb auch etwa gleichartig die notwendige Löthitze erhalten. Auch bilden sich Vorteile für den Schaltnocken aus. Bei einer einstückigen Ausbildung läßt er sich in einfacher Weise ausformen ; besteht er aus einem Zweitmaterial, ist die Verbindung in sinngemäßer Weise, wie vorbeschrieben, zu der Verbindung mit dem elektrischen Leiter durchführbar.

Besondere Ausbildungen, die speziell die vorgenannten Vorteile aufweisen, bestehen dann, wenn dem aus Draht gebildeten Schaltkontaktteil eine einstückige und materialeinheitliche Öse bzw. Schlaufe zugeordnet ist, die zur klemmenden oder Löt-Verbindung hergestellten Aufnahme eines Endes des elektrischen Leiters dient oder auch, daß der aus Draht gebildete Schaltkontaktteil einen aus Zweitmaterial bestehenden Träger für den Kontaktnocken aufweist, derart, daß der Träger für den Schaltnocken eine Aufnahme für das freie Ende des elektrischen Leiters aufweist, die wahlweise der Klemm- oder Lötverbindung dient.

Auf der Zeichnung ist die Erfindung in mehreren Ausführungsbeispielen in vereinfachter Weise dargestellt. Es zeigen

Figur 1 eine Lagerachse für ein Schwenklager eines Sonnenblendenkörpers mit elektrischer Ausrüstung,

Figuren 2, 3 und 4 ein Schaltkontaktteil als Stanzling in unterschiedlichen Ansichten,

Figur 5 ein weiteres Ausführungsbeispiel eines als Stanzling ausgebildeten Schaltkontaktteiles und

Figuren 6 bis 9 je ein Schaltkontaktteil aus einem strangförmigen Material, wie Draht.

Mit 1 ist eine Lagerachse bezeichnet ; die einzelnen Schenkel der winklig ausgebildeten Lagerachse sind zur Aufnahme von noch zu beschreibenden elektrischen Teilen mit Bohrungen 2 versehen. Während die Bohrung 2 im aufrechtstehenden Befestigungsschenkel vollständig durchgehend einen im wesentlichen gleichen Querschnitt aufweist, läuft die Bohrung 2 des Lagerachsenschenkels, welcher zur Aufnahme des Sonnenblendenkörpers bestimmt ist, in eine kammerähnlich gestaltete Halterung 3 aus. Die Halterung 3 ist in ihrer Form derart auf ein Kontaktteil 4 für einen elektrischen Schaltkontakt in kompensierender Ausführung ausgebildet, daß das Kontaktteil 4 ohne zusätzliche Maßnahmen sicher von der Halterung 3 aufgenommen ist. Zur Sicherung des Kontaktteiles 4 in der Halterung 3 wird allerdings auch ein elektrischer Leiter 5 mit herangezogen, welcher unlösbar und elektrisch leitend mit dem Kontaktteil 4 verbunden ist. Es ist ersichtlich, daß dann, wenn der elektrische Leiter schiebesicher festgelegt ist, auch die Halterung 3 den Kontaktteil 4 sicher und dauerhaft hält. Der Kontaktteil 4 kann aber auch auf andere Weise, sowohl radial als auch axial, sicher in der Halterung 3 aufgenommen werden, wenn ein Schaltnocken 6 die Wandung der Halterung 3 durchgreift und so außer der Kontaktbildung die Verschiebesicherung übernimmt. Die beiden Bohrungen 2 gehen im Bereich des Winkels der Lagerachse 1 in eine vergrößert ausgebildete Ausnehmung über ; diese dient im wesentlichen, wie strichpunktiert dargestellt ist, dem leichteren Einführen des elektrischen Leiters 5. Dieser wird nämlich mit seinem freien Ende, von der Halterung 3 ausgehend, so weit eingeführt, bis das Kontaktteil 4 vollständig von der Halterung 3 aufgenommen ist. Danach wird das freie Ende des elektrischen Leiters 5 von der Ausnehmung 7 her durch den anderen Schenkel der Lagerachse 1 durchgeführt.

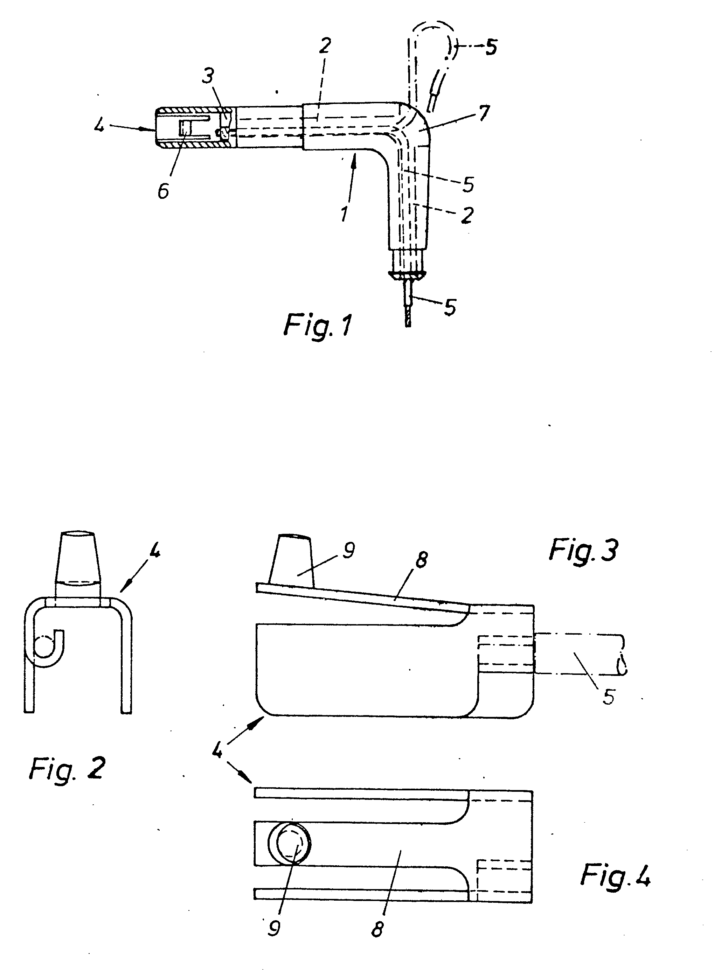

Ein elektrisches Kontaktteil 4, wie es beispielsweise in der Ausführung nach Fig. 1 von der Halterung 3 aufgenommen ist, zeigen die Fig. 2 bis 4. Dieses Kontaktteil ist, wie aus Fig. 2 hervorgeht, im wesentlichen U-förmig gestaltet, wobei der Bereich des Schenkels eine Kontaktfeder 8 bildet, die im Bereich ihres frei auslaufenden Endes mit einem Kontaktnocken 9 versehen ist. Der Kontaktnocken 9 besteht aus einem Zweitmaterial und kann beliebig mit der Kontaktfeder 8 verbunden sein, wie durch Löten, Schweißen, durch Eigen- oder Fremdniet. Es ist ebenfalls offengelassen, in welcher Weise der elektrische Leiter 5 mit dem Kontaktteil 4a verbunden ist ; vorgesehen ist eine Aufnahme für das freie abisolierte Ende des elektrischen Leiters 5, welche aus einer freigeschnittenen und krampenartig ausgeformten Zunge gebildet ist.

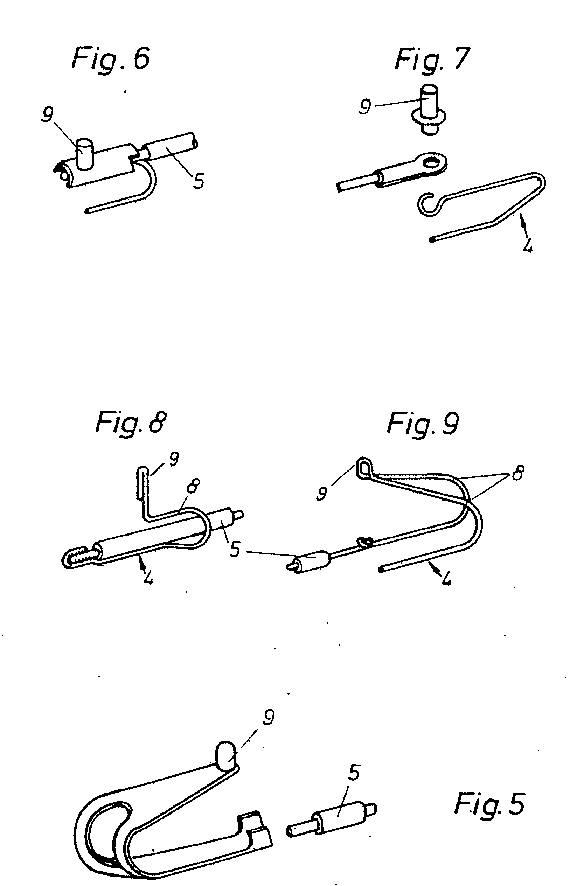

Ein weiteres Ausführungsbeispiel eines Teils des elektrischen Schaltkontaktes, welches ebenfalls aus einem Stanzling erstellt ist, zeigt die Fig. 5. Es handelt sich dabei um einen im wesentlichen U-förmig gestalteten Kontaktteil 4, bei dem als Wesensmerkmal ein Kontaktnocken 9 und eine Aufnahme für das frei isolierte Ende des elektrischen Leiters 5 vorhanden sind. Beide Ausbildungen sind jeweils dem Endbereich der von der U-förmigen Ausbildung ableitbaren Schenkel zugeordnet.

Eine Kombination aus einem Stanzteil und einem Drahtteil zeigt die Fig. 6. Das Stanzteil übernimmt im wesentlichen zwei Aufgaben ; es dient als Träger für den Kontaktnocken 9 und weist eine Klemmausbildung auf, die zugleich den U-förmig gebogenen Drahtbügel und das freie Ende des elektrischen Leiters 5 hält.

Bei der Fig. 7 ist der Kontaktnocken 9 als Befestigungselement bzw. Verbindungselement für eine Klemme und eine Öse eines aus Draht im wesentlichen U-förmig gebogenen Kontaktteiles 4 ausgebildet, und zwar durchgreift ein der Kontaktfläche gegenüberliegendes Ende die Öse für den elektrischen Leiter und eine Öse am Ende eines Schenkels des U-förmigen Drahtes. Es ist offengelassen, ob die Festlegung durch ein Verlöten oder aber durch ein Vernieten durchgeführt wird.

Figuren 8 und 9 sind Ausführungsbeispiele von Kontaktteilen 4, welche ausschließlich aus Draht gebildet sind. Während die Kontaktfeder 8 nach Fig. 8 nur zweischenklig ausgebildet ist, ist die Kontaktfeder 8 nach Fig. 9 vierschenklig ausgebildet. Die Kontaktnocken 9 sind jeweils aus radial abstrebenden Ösen gebildet. Die Verbindung zum elektrischen Leiter 5 ist derart vorgenommen, daß jeweils das freie Ende des elektrischen Leiters 5 einen Halt erhält, wobei in der einfachsten Ausführung der Halt durch eine Klemmung zu sichern ist, während jedoch wegen der größeren Sicherheit einer Lötverbindung der Vorzug zu geben ist.

## Ansprüche

1. Sonnenblende für Fahrzeuge mit einem durch eine elektrische Lichtquelle beleuchteten Spiegel, und einer L-förmigen Lagerachse (1), deren einer Schenkel im Schwenklager des Sonnenblendenkörpers aufgenommen und deren anderer Schenkel an der Karosserie befestigt ist, wobei zumindest ein elektrischer Leiter (5) in der hohlen Lagerachse (1) des Schwenklagers geführt ist und ein Teil des elektrischen Kontaktes (4) für die Ein- bzw. Ausschaltung der Lichtquelle am Ende des im Schwenklager aufgenommenen Schenkels der Lagerachse (1) angeordnet ist und die Schaltstellungen durch die Relativbewegung zwischen Lagerachse (1) und Sonnenblendenkörper, bei deren Verlagerung, einnehmbar sind, dadurch gekennzeichnet, daß die Lagerachse (1) des Schwenklagers aus einem nichtleitenden Material besteht, daß die Halterung (3) für den einen Teil des elektrischen Schaltkontaktes (4) am Ende des im Schwenklager aufgenommenen Schenkels der Lagerachse (1) eine prismatische oder ovale den Querschnitt des Schaltkontaktteiles (4) aufnehmende Ausnehmung ist oder aber eine zylindrische Ausnehmung mit einer Verdrehsicherung, wie Längsnut oder kopfendige Aussparung, in die eine Sicherungsausbildung zur drehsicheren Festlegung des Kontaktteiles (4) einragt und daß die Bohrung (2) in jedem Schenkel der Lagerachse (1) vollständig durchgehend und im Winkelbereich frei auslaufend ausgebildet ist.

2. Sonnenblende nach Anspruch 1, dadurch gekennzeichnet, daß die Verdrehsicherung des von der Halterung (3) der Lagerachse (1) aufgenommenen Schaltkontaktteiles (4) ein Kontaktnocken (9) ist, der die Wandung der Halterung (3) durchgreift.

3. Sonnenblende nach Anspruch 1, dadurch gekennzeichnet, daß die Lagerachse (1) im Bereich des Zusammentreffens der beiden Bohrungen (2) der winklig zueinander stehenden Schenkel eine gegenüber den Enden der Bohrungen (2) vergrößerte und ineinander übergehende Ausnehmung ist.

4. Sonnenblende nach Anspruch 1 oder 2, dadurch gekennzeichnet, daß der von der Halterung (3) der Lagerachse (1) aufgenommene elektrische Schaltkontaktteil (4) eine U-förmig gestaltete metallische Feder mit einem Kontaktnocken (9) ist, der im Bereich des freien Endes eines Schenkels der U-förmigen Feder angeordnet ist.

5. Sonnenblende nach Anspruch 4, dadurch gekennzeichnet, daß der Schaltkontaktteil (4) ein metallischer Stanzling ist und der Kontaktnocken (9) aus einem Zweitmaterial gefertigt, mit einem Schenkel verbunden ist.

6. Sonnenblende nach Anspruch 4, dadurch gekennzeichnet, daß der Schaltkontaktteil (4) ein metallischer Stanzling ist und daß der Kontaktnocken (9) einstückig und materialeinheitlich mit dem Stanzteil ausgebildet ist.

7. Sonnenblende nach Anspruch 4 oder 5, dadurch gekennzeichnet, daß der elektrische Schaltkontaktteil (4) krampenartig gestaltete Klemmschenkel aufweist, welche zueinander schließbar sind und ein Kontaktende der elektrischen Leitung (5) geklemmt aufnehmen.

8. Sonnenblende nach Anspruch 1 oder 2, dadurch gekennzeichnet, daß der von der Halterung (3) der Lagerachse (1) aufgenommene elektrische Schaltkontaktteil (4) aus Draht gebildet ist und ein- oder doppelschenklig eine haarnadelförmige Gestalt aufweist.

9. Sonnenblende nach Anspruch 8, dadurch gekennzeichnet, daß der aus Draht gebildete Schaltkontaktteil (4) einen einstückigen und materialeinheitlichen Kontaktnocken (4) aufweist.

10. Sonnenblende nach Anspruch 8, dadurch gekennzeichnet, daß dem aus Draht gebildeten Schaltkontaktteil (4) ein aus Zweitmaterial bestehender Kontaktnocken (9) zugeordnet ist.

11. Sonnenblende nach Anspruch 8, dadurch gekennzeichnet, daß der aus Draht gebildete Schaltkontaktteil (4) eine aus Zweitmaterial bestehende Aufnahme für ein Ende des elektrischen Leiters (5) aufweist.

12. Sonnenblende nach Anspruch 8, dadurch gekennzeichnet, daß dem aus Draht gebildeten Schaltkontaktteil (4) eine einstückige und materialeinheitliche Öse bzw. Schlaufe zugeordnet ist, die zur klemmenden oder Löt-Verbindung hergestellten Aufnahme eines Endes des elektrischen Leiters (5) dient.

13. Sonnenblende nach Anspruch 8, dadurch gekennzeichnet, daß der aus Draht gebildete Schaltkontaktteil (4) einen aus Zweitmaterial bestehenden Träger für den Kontaktnocken (9) aufweist.

14. Sonnenblende nach Anspruch 13, dadurch gekennzeichnet, daß der Träger für den Kontaktnocken (9) eine Aufnahme für das freie Ende des elektrischen Leiters (5) aufweist, die wahlweise der Klemm- oder Lötverbindung dient.

## Claims

1. A sun visor for a vehicle, the visor having a mirror lightable by an electric light and an L-shaped bearing shaft (1) one leg of which is held in a pivot bearing of the sun-visor body and the other leg of which is fastenable to the vehicle body, at least one electric conductor running through the, hollow, bearing shaft (1) for the pivot bearing and one part (4) of electric contacts serving to switch the light on and off being disposed in the end portion of that leg of the bearing shaft (1) that is held in the pivot bearing, the switching positions being taken up as a result of relative motion between the bearing shaft (1) and the sun-visor body when that takes place, characterized in that the bearing shaft (1) for the pivot bearing is made of a non-conductive material, that a mount (3) for the one part (4) of the electric switching contacts in the end portion of the bearing shaft's (1) leg held in the pivot bearing is a prismatic or oval recess retaining the cross-section of the one part (4) of the switching contacts or, alternatively, a cylindrical recess provided with rotation-preventing means, for example a longitudinal groove or a notch extending from the end face, into which projects a locking element for holding the one contact part (4) fast against rotation, and in that the bore in each of the legs of the bearing shaft (1) extends along the full length thereof and is open at the angular junction.

2. A sun visor according to claim 1, characterized in that a contact-making/breaking cam (9) forms the rotation-preventing means of the one part (4) of the switching contacts retained in the mount (3) of the bearing shaft (1) and projects through the wall of the mount (3).

3. A sun visor according to claim 1, characterized in that the bearing shaft (1) in the section where the two bores (2) of the legs, which are angularly disposed in relation to one another, converge has a recess which in comparison with the respective end of the bores (2) is enlarged and forms a transition from the one bore to the other.

4. A sun visor according to claim 1 or claim 2, characterized in that the one part (4) of the electric switching contacts retained in the mount (3) of the bearing shaft (1) is a U-shaped metal spring provided with the contact-making/breaking cam (9) arranged in the vicinity of the free end of one of the legs of the U-shaped spring.

5. A sun visor according to claim 4, characterized in that the one part (4) of the switching contacts is a metal stamping and the contact-making/breaking cam (9) made of a different material is joined to one of the legs.

6. A sun visor according to claim 4, characterized in that the one part (4) of the switching contacts is a metal stamping, and in that the contact-making/breaking cam (9) is made of the same material as and integral with the stamping.

7. A sun visor according to claim 4 or claim 5, characterized in that the one part (4) of the electric contacts is provided with cramp-shaped clamping webs arranged to be bent towards one another and to clampingly hold a contact and portion of the electric conductor (5).

8. A sun visor according to claim 1 or claim 2, characterized in that the one part (4) of the electric switching contacts retained in the mount (3) of the bearing shaft (1) is made of a wire bent into a single or double hair-pin-shaped configuration.

9. A sun visor according to claim 8, characterized in that the one part (4) of the switching contacts formed of the wire includes the contact-making/breaking cam (9) which is integral therewith and made of the same material.

10. A sun visor according to claim 8, characterized in that the one part (4) of the switching contacts formed of the wire is provided with a contact-making/breaking cam (9) made of a different material.

11. A sun visor according to claim 8, characterized in that the one part (4) of the switching contacts formed of the wire is provided with a holder made of a different material and serving to retain an end portion of the electric conductor (5).

12. A sun visor according to claim 8, characterized in that the one part (4) of the switching contacts formed of the wire includes a lug, or loop, integral therewith and made of the same material and serving to retain by means of a clamping or soldered joint an end portion of the electric conductor (5).

13. A sun visor according to claim 8, characterized in that the one part (4) of the switching contacts made of the wire is provided with a support for the contact-making/breaking cam (9), the support being made of a different material.

14. A sun visor according to claim 13, characterized in that the support for the contact-making/breaking cam (9) is provided with a holder for the free end portion of the electric conductor (5), the holder serving to make, selectively, a clamping or soldered connection.

**Revendications**

1. Pare-soleil pour véhicules avec un miroir éclairé au moyen d'une source lumineuse électrique et un axe de fixation (1) en forme de L, dont l'une des branches s'engage dans le palier d'articulation du corps du pare-soleil tandis que l'autre branche est fixée à la carrosserie, avec au moins un conducteur électrique (5) passant à l'intérieur de l'axe de fixation creux (1) associé au palier d'articulation, avec au moins une pièce de contact électrique (4) servant à l'allumage et à l'extinction de la source lumineuse disposée à l'extrémité de l'axe de fixation (1) qui s'engage dans le palier d'articulation, le système pouvant prendre l'une ou l'autre des positions d'allumage et d'extinction par déplacement relatif entre l'axe de fixation (1) et le corps du pare-soleil, lorsqu'on change la position de celui-ci, caractérisé par le fait que l'axe de fixation (1) qui s'engage dans le palier d'articulation est réalisé en une matière électriquement non conductrice, que le réceptacle (3) prévu à l'extrémité de la branche de l'axe de fixation (1) qui s'engage dans le palier d'articulation pour recevoir une pièce du contact électrique de commande (4) est un évidement de section prismatique ou ovale correspondant à la forme de la pièce de contact de commande (4) ou bien un évidement de section cylindrique avec un dispositif d'immobilisation en rotation tel qu'une rainure longitudinale ou un évidement correspond à l'extrémité de tête où s'enclenche un élément d'immobilisation pour le positionnement fixe en rotation de la pièce de contact (4), et par le fait que les trous (2) traversent de bout en bout les deux branches de l'axe de fixation (1) et se terminent en débouchant dans la zone du coude formé par les deux branches.

2. Pare-soleil selon la revendication 1, caractérisé par le fait que le système d'immobilisation en rotation de la partie de contact électrique (4) qui est logée dans le réceptacle (3) de l'axe de fixation (1), consiste en un doigt de contact (9) qui traverse la paroi du réceptacle (3).

3. Pare-soleil selon la revendication 1, caractérisé par le fait que dans la zone de convergence des deux trous (2) des branches qui forment un angle entre elles, les extrémités des deux trous sont évasées et forment un évidement de transition entre les deux trous.

4. Pare-soleil selon la revendication 1 ou 2, caractérisé par le fait que la pièce de contact électrique de commande (4) qui s'insère dans le réceptacle (3) de l'axe de fixation (1) est un ressort métallique en forme de U, avec un doigt de contact (9) qui est disposé dans la zone de l'extrémité libre de l'une des branches du ressort en forme de U.

5. Pare-soleil selon la revendication 4, caractérisé par le fait que la pièce de contact de commande (4) est une pièce emboutie métallique et que le doigt de contact (9), réalisé en une matière différente, est réuni par jonction avec l'une des branches de cette pièce.

6. Pare-soleil selon la revendication 4, caractérisé par le fait que la pièce de contact de commande (4) est une pièce emboutie métallique, et que le doigt de contact (9) est réalisé en une seule pièce et avec le même métal que cette pièce emboutie.

7. Pare-soleil selon la revendication 4 ou 5, caractérisé par le fait que la pièce de contact électrique de commande (4) comporte des languettes de serrage en forme de pattes, qui peuvent être rabattues l'une sur l'autre et emprisonner ainsi par sertissage une extrémité de contact du conducteur électrique (5).

8. Pare-soleil selon la revendication 1 ou 2, caractérisé par le fait que la pièce de contact électrique de commande (4) qui s'insère dans le réceptacle (3) de l'axe de fixation (1) est constituée par un fil métallique et qu'avec une ou deux branches, elle présente une structure en forme d'épingle à cheveux.

9. Pare-soleil selon la revendication 8, caractérisé par le fait que la pièce de contact de commande (4) réalisée en fil métallique, comporte un doigt de contact (9) du même métal, le tout étant réalisé en une seule pièce.

10. Pare-soleil selon la revendication 8, caractérisé par le fait que la pièce de contact de commande (4) réalisée en fil métallique est équipée d'un doigt de contact (9) réalisé en un métal différent.

11. Pare-soleil selon la revendication 8, caractérisée par le fait que la pièce de contact de commande (4) réalisé en fil métallique comporte un élément en métal différent destiné à recevoir une extrémité du conducteur électrique (5).

12. Pare-soleil selon la revendication 8, caractérisé par le fait que la pièce de contact de commande (4) réalisée en fil métallique comporte un œillet ou une cosse du même métal, pris dans la masse, servant à la jonction par soudage ou par sertissage d'une extrémité du conducteur électrique (5).

13. Pare-soleil selon la revendication 8, caractérisé par le fait que la pièce de contact de commande (4) réalisée en fil métallique, comporte un élément support réalisé en une matière différente pour recevoir le doigt de contact (9).

14. Pare-soleil selon la revendication 13, caractérisé par le fait que l'élément support du doigt de contact (9) comporte aussi un logement prévu pour recevoir l'extrémité libre du conducteur électrique (5), et pouvant servir, aux choix, à la réalisation d'une jonction par serrage ou par soudage.

**0 023 946**

Fig. 1

Fig. 2

Fig. 3

Fig. 4

1

Fig. 6

Fig. 7

Fig. 8

Fig. 9

Fig. 5